# EUROPÄISCHE PATENTSCHRIFT

(11) **EP 3 017 739 B1**
(45) Veröffentlichungstag und Bekanntmachung des Hinweises auf die Patenterteilung: **19.04.2017**
(21) Anmeldenummer: 15192555.9
(22) Anmeldetag: 02.11.2015
(51) Int. Cl.: A47J 43/07

(54) **ELEKTRISCHES KÜCHENGERÄT**
ELECTRICAL KITCHEN APPLIANCE
APPAREIL DE CUISINE ELECTRIQUE

(30) Priorität: 04.11.2014 DE 102014116075
(43) Veröffentlichungstag der Anmeldung: 11.05.2016
(60) Teilanmeldung: 16172410.9
(73) Patentinhaber: Vorwerk & Co. Interholding GmbH, 42275 Wuppertal (DE)
(72) Erfinder: Hackert, Georg, 44869 Bochum (DE); Hilgers, Stefan, 45357 Essen (DE); Schomacher, Jutta, 42489 Wülfrath (DE); Sauerwald, Andres, 46238 Bottrop (DE)
(74) Vertreter: Müller, Enno

(56) Entgegenhaltungen:
- EP-A1- 2 556 778
- DE-A1- 3 605 088

## Beschreibung

Die Erfindung betrifft zunächst ein elektrisches Küchengerät zur Verarbeitung von Nahrungsmitteln mittels wenigstens einer von einem Benutzer einstellbaren Verarbeitungsfunktion, mit einer Einstelleinrichtung zum benutzerseitigen Einstellen wenigstens eines Parameters der Verarbeitungsfunktion, wobei die Einstelleinrichtung als Drehknopf ausgebildet ist, sowie ein entsprechendes Verfahren zum Betrieb des elektrischen Küchengeräts.

Die Erfindung betrifft weiter ein Verfahren zum Betrieb eines elektrischen Küchengerätes zur Verarbeitung von Nahrungsmitteln mittels wenigstens einer von einem Benutzer einstellbaren Verarbeitungsfunktion, wobei das elektrische Küchengerät eine Einstelleinrichtung zum benutzerseitigen Einstellen wenigstens eines Parameters der Verarbeitungsfunktion aufweist und die Einstelleinrichtung als Drehknopf ausgebildet ist.

Derartige elektrische Küchengeräte sind z.B. in Form von universellen Küchenmaschinen aus der Praxis gut bekannt, wobei diese elektrischen Küchengeräte neben einem mechanischen Verarbeiten von Nahrungsmitteln, z.B. mittels eines Rührwerks oder Schneidmessers, häufig auch ein Garen der Nahrungsmittel ermöglichen. Zur Herstellung einer entsprechenden Speise sind in der Regel vorbestimmte Rezepte vorgesehen, die mehrere aufeinanderfolgende Rezeptschritte aufweisen und vom Benutzer des elektrischen Küchengeräts aufgerufen werden können.

Zum Stand der Technik wird etwa auf die EP 2 556 778 A1 verwiesen. Hieraus ist eine Küchenmaschine, wie sie als Ausgangspunkt der Erfindung gelten kann, bekannt. Weiter ist auch etwa auf die DE 36 05 088 A1 zu verweisen. Hieraus ist es bekannt, bei einem Drehknopf die Drehwinkellage als erste Steuergröße zu berücksichtigen und eine Drehwinkelgeschwindigkeit und Richtung als zweite Steuergröße.

Um dem Benutzer eines elektrischen Küchengeräts, wie es etwa aus
EP 2 556 778 A1 bekannt ist, das Herstellen einer Speise nach einem vorbestimmten Rezept zu ermöglichen, also um ein bestimmtes Rezept auswählen zu können, aber auch um das elektrische Küchengerät mit seinen Funktionen direkt anzusteuern, weisen derartige Geräte in der Regel eine Einstelleinrichtung zum benutzerseitigen Einstellen von Verarbeitungsfunktionen auf. Derartige Einstelleinrichtungen sind dabei typischerweise in das elektrische Küchengeräts integriert, z.B. in Form eines Drehknopfes oder auch in Form eines Touch-Displays.

Es ist die Aufgabe der Erfindung, ein derartiges elektrisches Küchengerät sowie ein Verfahren zum Betrieb des elektrischen Küchengeräts anzugeben, mit dem benutzerseitig eine einfache, schnelle und verlässliche Eingabe eines Parameters einer Verarbeitungsfunktion eingegeben werden kann.

Diese Aufgabe ist vorrichtungsmäßig durch den Gegenstand des Patentanspruchs 1 gelöst. Bevorzugte Weiterbildungen der Erfindung finden sich in den Unteransprüchen dazu.

Diese Aufgabe ist weiter verfahrensmäßig durch den Gegenstand des Anspruches 9 gelöst.

Die Lösung der Aufgabe liegt also in einem elektrischen Küchengerät zur Verarbeitung von Nahrungsmitteln mittels wenigstens einer von einem Benutzer einstellbaren Verarbeitungsfunktion, mit einer Einstelleinrichtung zum benutzerseitigen Einstellen wenigstens eines Parameters der Verarbeitungsfunktion, wobei die Einstelleinrichtung als Drehknopf ausgebildet ist, dadurch gekennzeichnet, dass ein derartiger Betriebsmodus vorgesehen ist, in dem mittels eines Drehens des Drehknopfes in eine Richtung der Parameter um einen ersten Betrag pro Drehwinkel verändert wird und mittels eines Drehens des Drehknopfes in die entgegengesetzte Richtung der Parameter um einen zweiten Betrag pro Drehwinkel verändert wird, wobei der erste Betrag vorn zweiten Betrag verschieden ist.

Es ist somit ein wesentlicher Punkt der Erfindung, dass jedenfalls auch ein solcher Betriebsmodus des elektrischen Küchengeräts bereitgestellt wird, in dem ein Drehen des Drehknopfes in zueinander entgegengesetzte Richtungen, abhängig von der Drehrichtung, jeweils unterschiedliche Wertesprünge beim Einstellen des Parameters der Verarbeitungsfunktion bewirkt. Geht es bei dem Parameter der Verarbeitungsfunktion z.B. um das Einstellen einer Zeit, so kann vorgesehen sein, dass das Drehen des Drehknopfes nach rechts die Zeit in Sekunden einstellt, während ein Drehen des Drehknopfes nach links um denselben Winkelbetrag die Minuten einstellt, beim Drehen des Drehknopfes nach links beim selben Drehwinkel also eine 60-fach größere Zeit eingestellt wird.

Die Erfindung sieht vor, dass bei dem erfindungsgemäßen elektrischen Küchengerät jedenfalls ein derartiger Betriebsmodus verwirklicht ist. Dies kann der einzige Betriebsmodus sein. Alternativ können jedoch auch andere Betriebsmodi, jedenfalls ein anderer Betriebsmodus, zur Verfügung stehen.

Beim Vorsehen von Drehknöpfen an herkömmlichen elektrischen Küchengeräten zum Einstellen von Parametern von Verarbeitungsfunktionen der elektrischen Küchengeräte ist es im Allgemeinen so, dass ein Drehen des Drehknopfes nach rechts den Parameter vergrößert und ein Drehen des Drehknopfes nach links den Parameter verringert. Dies kann grundsätzlich auch bei dem erfindungsgemäßen elektrischen Küchengerät vorgesehen sein. Gemäß einer bevorzugten Weiterbildung der Erfindung ist jedoch die Richtung, in der der Parameter durch Drehen des Drehknopfes in die eine Richtung bzw. in die andere Richtung verändert wird, dieselbe. Dies bedeutet, dass unabhängig von der Drehrichtung des Drehknopfes immer entweder nur eine Vergrößerung oder eine Verringerung des einzustellenden Parameters erzielt werden kann. Unter Bezugnahme auf das obige Beispiel, gemäß dem mit dem Drehknopf eine Zeit eingestellt wird, bedeutet dies, dass durch das Drehen des Drehknopfes in die eine Richtung zuerst die Minuten eingestellt werden können und durch Drehen des Drehknopfes in die entgegengesetzte Richtung, praktisch als Feineinstellung, dann die zusätzlichen Sekunden gewählt werden können.

Grundsätzlich kann die Richtung, in der der Parameter durch Drehen des Drehknopfes in die eine bzw. in die andere Richtung verändert wird, voreingestellt und nicht veränderbar sein. Gemäß einer bevorzugten Weiterbildung der Erfindung ist jedoch eine erste Umschalteinrichtung vorgesehen, die eine erste Umschaltfunktion bereitstellt, mittels der die Richtung, in der der Parameter durch Drehen des Drehknopfes in die eine bzw. in die andere Richtung verändert wird, umschaltbar ist. Die erste Umschalteinrichtung ermöglicht damit zwischen zwei Modi des Drehknopfes hin- und herzuschalten, nämlich zwischen einem ersten Modus, in dem ein Drehen, unabhängig von der Drehrichtung, zu einem Vergrößern des einzustellenden Parameters der Verarbeitungsfunktion führt, und einem anderen Modus, in dem, ebenfalls unabhängig von der Drehrichtung des Drehknopfes beim Einstellen des Parameters der Verarbeitungsfunktion, immer eine Verringerung des Parameters erfolgt. Dies ist insbesondere insofern vorteilhaft, als dass eine schon erzielte Einstellung des Parameters der Verarbeitungsfunktion auch wieder "zurückgedreht" werden kann, z.B. dann, wenn versehentlich eine Einstellung über einen gewünschten, vorbestimmten Wert hinaus erfolgt ist. Grundsätzlich kann die erste Umschalteinrichtung von der Einstelleinrichtung verschieden sein, also als separate Einrichtung des elektrischen Küchengeräts ausgestaltet sein. Vorzugsweise ist die Einstelleinrichtung jedoch als Druck-/Drehknopf ausgebildet, wobei die erste Umschaltfunktion durch ein Drücken des Druck-/Drehknopfes aktivierbar ist. Dies hat den Vorteil, dass sowohl das Einstellen des Parameters der Verarbeitungsfunktion als auch das Umschalten zwischen einem Vergrößern des Parameters durch Drehen des Druck-/Drehknopfes bzw. einem Verringern des Parameters durch Drehen des Druck-/ Drehknopfes über eine gemeinsame Einrichtung erzielbar ist. Der Benutzer muss also beim Einstellen bzw. Umschalten der Einstellrichtung nicht zwischen verschiedenen Einrichtungen des elektrischen Küchengeräts hin und her wechseln.

Dabei kann das Drücken des Druck-/Drehknopfes durch unterschiedliche Drückfunktionen gebildet sein. Möglich ist z.B. ein einfaches kurzes Drücken, aber auch ein "Doppelklick", also ein zweimaliges kurzes Drücken des Druck-/Drehknopfes hintereinander. Schließlich ist auch ein langes Drücken möglich, um die erste Umschaltfunktion zu aktivieren, also ein Drücken des Druck/Drehknopfes über eine vorbestimmte Zeitdauer hinaus. Das Vorsehen verschiedener Drückfunktionen hat den Vorteil, dass über den Druck/Drehknopf, abhängig von der jeweiligen erfassten Drückfunktion, nicht nur die erste Umschaltfunktion aktivierbar ist, sondern auch andere Funktionen ansteuerbar sind.

Wie oben bereits ausgeführt, kann der Betriebsmodus, in dem abhängig von der Drehrichtung des Drehknopfes bei derselben Drehung des Drehknopfes unterschiedliche Wertesprünge erfolgen, der einzige Betriebsmodus sein. Gemäß einer bevorzugten Weiterbildung der Erfindung ist jedoch eine zweite Umschalteinrichtung vorgesehen, die eine zweite Umschaltfunktion bereitstellt, mittels der ein anderer Betriebsmodus aktivierbar ist, in dem mittels eines Drehens des Drehknopfes in die eine Richtung bzw. in die entgegengesetzte Richtung der Parameter jeweils um denselben Betrag pro Drehwinkel verändert wird. Dies stellt also einen derartigen Betriebsmodus dar, wie er bereits von herkömmlichen elektrischen Küchengeräten bekannt ist, nämlich dass die Drehrichtung des Drehknopfes auf den jeweiligen Betrag der Wertesprünge keinen Einfluss hat. Eine ganz besonders bevorzugte Ausgestaltung sieht zusätzlich vor, dass in dem anderen Betriebsmodus die Richtungen, in die der Parameter durch Drehen des Drehknopfes in die eine Richtung bzw. in die andere Richtung verändert wird, zueinander entgegengesetzt sind. Mit anderen Worten bedeutet dies, dass damit ein derartiger Betriebsmodus bereitgestellt wird, in dem der Drehknopf auch so bedienbar ist, wie ganz allgemein von Drehknöpfen bekannt, nämlich dass ein Drehen in die eine Richtung zu einer Vergrößerung des einzustellenden Parameters führt und eine Drehung in die andere Richtung zu einer Verkleinerung, wobei die Beträge der Wertesprünge in beiden Richtungen bei betragsmäßig demselben Drehwinkel gleich sind.

Schließlich ist gemäß einer bevorzugten Weiterbildung der Erfindung ein Touch-Display vorgesehen, wobei die erste Umschaltfunktion und/ oder die zweite Umschaltfunktion mittels des Touch-Displays aktivierbar ist. Dies kann grundsätzlich alternativ oder zusätzlich zur Verwirklichung der Umschaltfunktionen mittels des Drehknopfes bzw. Druck-/Drehknopfes vorgesehen sein. Vorteilhaft ist die Verwendung eines Touch-Displays für derartige Umschaltfunktionen insofern, als dass ein entsprechend beschriftetes Tastenfeld angezeigt werden kann, in dem angegeben wird, was durch Drücken dieses Tastenfeldes bewirkt wird, z.B. ein Umschalten zwischen verschiedenen Betriebsmodi oder eine Umkehrung der Richtung, in der die Veränderung eines einzustellenden Parameters der Verarbeitungsfunktion erfolgt, also unabhängig von der Drehrichtung nur ein Vergrößern oder aber nur ein Verkleinern. Das Vorsehen eines derartigen Touch-Displays macht die Bedienung des elektrischen Küchengeräts für den Benutzer insofern einfacher, als dass er sich nicht im Vorfeld mit den Auswirkungen befasst haben muss, die verschiedene Drückfunktionen bei dem Druck-/Drehknopf bewirken. Vielmehr wird ihm im Klartext angezeigt, was das jeweilige Drücken einer Schaltfläche auf dem Touch-Display für Umschaltfunktionen bewirkt.

In einer Kombination mit einem zuvor bei einem elektrischen Küchengerät zur Verarbeitung von Nahrungsmitteln mittels wenigstens einer von einem Benutzer einstellbaren Verarbeitungsfunktion beschriebenen Verfahren bei einem Küchengerät, mit einer Einstelleinrichtung zum benutzerseitigen Einstellen wenigstens eines Parameters der Verarbeitungsfunktion, wobei die Einstelleinrichtung als Drehknopf ausgebildet ist, kann auch ein derartiger Betriebsmodus vorgesehen sein, in dem beim Drehen des Drehknopfes die Beschleunigung der Drehung des Drehknopfes erfasst wird und auf der Grundlage der erfassten Beschleunigung der Parameter der Verarbeitungsfunktion automatisch eingestellt wird.

Gemäß diesem Aspekt der Erfindung wird erfasst, wie sich die Beschleunigung der Drehung des Drehknopfes bei Betätigung durch den Benutzer verhält. Diese erfasste Beschleunigung wird dann verwendet, um basierend darauf den Parameter der Verarbeitungsfunktion einzustellen. Bestimmten erfassten Beschleunigungswerten ist also jeweils eine entsprechende Einstellung des Parameters der Verarbeitungsfunktion zugeordnet, die damit automatisch eingestellt wird.

Grundsätzlich ist es dazu ausreichend, nur die Beschleunigung des Drehknopfes bei der Drehung durch den Benutzer zu erfassen und für die Einstellung des Parameters der Verarbeitungsfunktion zu berücksichtigen. Gemäß einer bevorzugten Weiterbildung der Erfindung ist jedoch vorgesehen, beim Drehen des Drehknopfes zusätzlich zur Beschleunigung die Drehrichtung zu erfassen und zur automatischen Einstellung der Verarbeitungsfunktion ebenfalls zu berücksichtigen. Insbesondere ist gemäß einer bevorzugten Weiterbildung der Erfindung vorgesehen, dass die automatische Einstellung der Verarbeitungsfunktion eine automatische Rezeptauswahl umfasst. Ganz besonders bevorzugt ist in diesem Zusammenhang, dass die automatische Rezeptauswahl auf einer Quasi-Zufallsfunktion beruht.

In diesem Zusammenhang kann also bei einer Rezeptauswahl in einem derartigen "Zufallsmodus" die Beschleunigung der Drehung des Drehknopfes ausgewertet werden, wodurch die automatische Auswahl eines Rezeptes erfolgt. Da die Beschleunigung des Drehknopfes beim Drehen durch den Benutzer des elektrischen Küchengeräts nur sehr schwer in vorbestimmter Weise erfolgen kann, der Benutzer also letztlich nicht sicher sein kann, eine bestimmte Beschleunigung zu erzielen, kann die Beschleunigung im Rahmen der Quasi-Zufallsfunktion dazu verwendet werden, eine automatische und für den Benutzer zufällige Rezeptauswahl zu generieren, dem Benutzer also ein Rezept anzubieten, das er nicht aktiv gewählt hat, sondern durch die von ihm generierte Beschleunigung des Drehknopfes "zufällig" ausgewählt hat.

Dieser Auswahl eines Rezeptes auf "zufällige" Weise, kann eine Zusammenstellung von Favoritenrezepten des Benutzers vorausgegangen sein, denen z.B. vorhandene Zutaten oder ähnliche Angaben zugrunde liegen. Der Benutzer des elektrischen Küchengeräts kann z.B. durch Scrollen in einer Zutatenliste, die ihm auf einer Anzeigeeinrichtung des elektrischen Küchengeräts angezeigt wird, die ihm zur Verfügung stehenden Rezeptzutaten auswählen, und das elektrische Küchengerät bietet ihm daraufhin aus einer auf der Grundlage dieser ausgewählten Zutaten möglichen Liste zur Verfügung stehender Rezepte ein aufgrund der erfassten Beschleunigung des Drehknopfes "zufällig" ausgewähltes Rezept an.

Weiter kann bei einem elektrischen Küchengerät zur Verarbeitung von Nahrungsmitteln mittels wenigstens einer von einem Benutzer einstellbaren Verarbeitungsfunktion, wobei das elektrische Küchengerät eine Einstelleinrichtung zum benutzerseitigen Einstellen wenigstens eines Parameters der Verarbeitungsfunk tion aufweist und die Einstelleinrichtung als Drehknopf ausgebildet ist, vorgesehen sein, dass in einem Betriebsmodus beim Drehen des Drehknopfes die Beschleunigung der Drehung des Drehknopfes erfasst und auf der Grundlage der erfassten Beschleunigung der Parameter der Verarbeitungsfunktion automatisch eingestellt wird.

Bevorzugte Ausgestaltungen dieses erfindungsgemäßen Verfahrens ergeben sich in Analogie zu den zuvor beschriebenen bevorzugten Ausführungsbeispielen des erfindungsgemäßen elektrischen Küchengeräts.

Nachfolgend wird die Erfindung anhand von bevorzugten Ausführungsbeispielen unter Bezugnahme auf die Zeichnung näher erläutert. In der Zeichnung zeigt:
- Fig. 1: schematisch ein elektrisches Küchengerät mit seinen wesentlichen Bestandteilen gemäß einem bevorzugten Ausführungsbeispiel der Erfindung,
- Fig. 2: schematisch den Betrieb des Druck-/Drehknopfes des elektrischen Küchengeräts gemäß dem bevorzugten Ausführungsbeispiel der Erfindung zum Einstellen einer Zeitdauer in Minuten,
- Fig. 3: schematisch den Betrieb des Druck-/Drehknopfes des elektrischen Küchengeräts gemäß dem bevorzugten Ausführungsbeispiel der Erfindung zum Einstellen der Zeitdauer in Sekunden,
- Fig. 4: schematisch den Betrieb des Druck-/Drehknopfes des elektrischen Küchengeräts gemäß dem bevorzugten Ausführungsbeispiel der Erfindung zum Korrigieren der Zeitdauer in Sekunden,

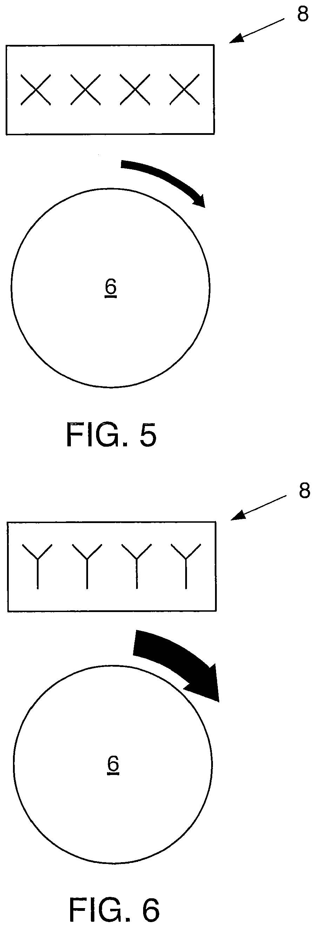

- Fig. 5: schematisch den Betrieb des Druck-/Drehknopfes des elektrischen Küchengeräts gemäß dem bevorzugten Ausführungsbeispiel der Erfindung zur Auswahl eines ersten Rezeptes mit einer Quasi-Zufallsfunktion und
- Fig. 6: schematisch den Betrieb des Druck-/Drehknopfes des elektrischen Küchengeräts gemäß dem bevorzugten Ausführungsbeispiel der Erfindung zur Auswahl eines zweiten Rezeptes mit einer Quasi-Zufallsfunktion.

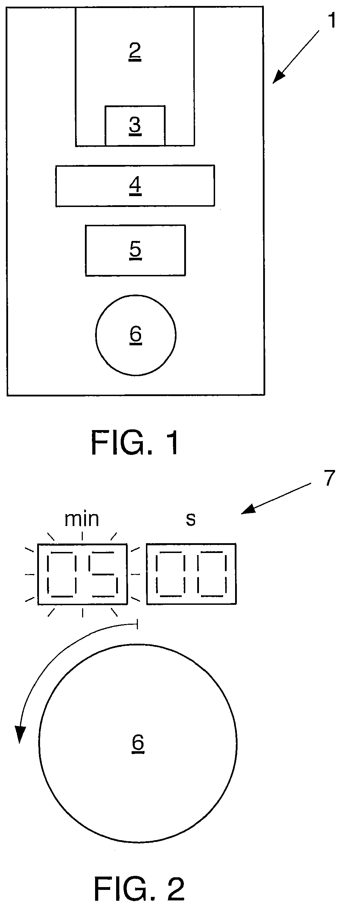

Aus Fig. 1 ist ein elektrisches Küchengerät 1 gemäß einem bevorzugten Ausführungsbeispiel der Erfindung mit seinen wesentlichen Bestandteilen ersichtlich. Das elektrische Küchengerät 1 weist einen Verarbeitungsraum 2 auf, in den Nahrungsmittel zur Verarbeitung hineingegeben werden können. Zur Verarbeitung der Nahrungsmittel ist in dem Verarbeitungsraum 2 als Verarbeitungseinrichtung ein Rühr- und Schneidwerk 3 vorgesehen. Angesteuert wird das Rühr- und Schneidwerk 3 von einer zentralen Steuereinheit 4, die auch ansonsten das elektrische Küchengerät 1 steuert und dessen verschiedene Bestandteile miteinander koordiniert.

Insbesondere kann die zentrale Steuereinheit 4, auf entsprechende Ansteuerung durch einen Benutzer hin, das Rühr- und Schneidwerk 3 hinsichtlich seiner Drehzahl und hinsichtlich seiner Betriebsdauer ansteuern, also z.B. in Form von "Drehzahlstufe 7 für 10 Sekunden". Um dem Benutzer des elektrischen Küchengeräts 1 die Möglichkeit zu geben, eine entsprechende Ansteuerung vorzunehmen, und zwar entweder direkt durch Eingabe der entsprechenden Parameter oder mittelbar durch Auswahl eines entsprechenden Rezeptes, weist das elektrische Küchengerät 1 ein Touch-Display 5 sowie eine Einstelleinrichtung 6 auf, und zwar in Form eines Druck-/Drehknopfes. Auf dem Touch-Display 5 sind verschiedene Funktionen anzeigbar, die vom Benutzer des elektrischen Küchengeräts 1 durch Berühren ausgewählt werden können. Ferner bietet die Einstelleinrichtung 6, nämlich aufgrund ihrer Druck- bzw. Drehfunktion, die Möglichkeit, gewisse Parameter einzustellen, die auf dem Touch-Display 5 angezeigt werden, bzw. zwischen verschiedenen Betriebsmodi zu wechseln.

Welche Funktionalität der Einstelleinrichtung 6 gemäß einem ersten Aspekt des vorliegend beschriebenen bevorzugten Ausführungsbeispiels zukommt, ist schematisch aus den Fig. 2, 3 und 4 ersichtlich. Dort ist ein Teil 7 des Touch-Displays 5, also ein Ausschnitt des Touch-Displays 5 gezeigt, der in Minuten ("min") sowie in Sekunden ("s") eine mittels der Einstelleinrichtung 6 vom Benutzer eingestellte Zeitdauer anzeigt. Diese vom Teil 7 des Touch-Displays 5 angezeigte Zeitdauer gibt an, wie lange das Rühr- und Schneidwerk 3 von der zentralen Steuereinheit 4 mit einer vorbestimmten, vorliegend nicht weiter relevanten Drehzahl angesteuert wird.

Zur Einstellung dieser Zeitdauer geht der Benutzer nun so vor, dass er zuerst, nämlich zur Einstellung der Zeit in Minuten, die Einstelleinrichtung, die als Druck-/Drehknopf sowohl nach links als auch nach rechts drehbar ist, so lange nach links dreht, bis die gewünschte Minutenzahl, vorliegend "5", angezeigt wird. Wie schematisch durch den Pfeil angedeutet, ist es dazu erforderlich, dass der Benutzer die Einstelleinrichtung 6 etwa um 90° nach links dreht.

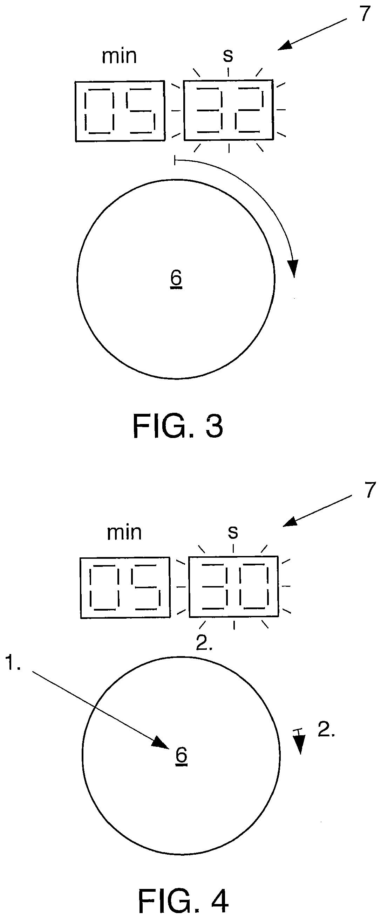

In einem zweiten Schritt, der in Fig. 3 dargestellt ist, stellt der Benutzer nun die Sekunden ein. Gewünscht ist vorliegend die Einstellung von 30 Sekunden, wozu der Benutzer die Einstelleinrichtung 6, ebenfalls um etwa 90°, nach rechts dreht. Obwohl also der Benutzer bei der Einstellung der Minuten einerseits und bei der Einstellung der Sekunden andererseits die Einstelleinrichtung 6 praktisch immer um denselben Winkelbetrag gedreht hat, ist mit der Drehung nach links eine Einstellung von 5 Minuten verbunden gewesen, während die Drehung nach rechts nur zu einer Einstellung von etwa 30 Sekunden geführt hat. Dies beruht darauf, dass die Einstelleinrichtung 6 als Druck-/Drehknopf nicht nur den überstrichenen Winkelbereich beim Drehen erfasst, sondern auch die Drehrichtung, und für verschiedene Drehrichtungen betragsmäßig verschiedene Wertesprünge vorgesehen sind.

Für die Ansteuerung des vorliegend einzustellenden Parameters, also der Zeitdauer zum Betrieb des Rühr- und Schneidwerks 3, bewirkt eine Drehung der Einstelleinrichtung nach links eine zehnmal stärkere Erhöhung der Zeitdauer als eine Drehung nach rechts. Dies ermöglicht eine Grobeinstellung durch Drehen der Einstelleinrichtung 6 nach links, gefolgt von einer Feineinstellung der Zeitdauer durch ein Drehen der Einstelleinrichtung 6 nach rechts.

Wie dem Teil 7 des Touch-Displays 5 zur Anzeige der Zeitdauer ein Fig. 3 entnehmbar, ist es dem Benutzer vorliegend jedoch nicht gelungen, genau eine zusätzliche Zeitdauer von 30 Sekunden einzustellen. Vielmehr hat das Drehen der Einstelleinrichtung 6 nach rechts zu einer Einstellung von 32 Sekunden geführt, die der Benutzer nun korrigieren möchte, um zu der tatsächlich gewünschten Einstellung von 30 Sekunden zu gelangen. Die Vorgehensweise dazu ist Fig. 4 entnehmbar. Dort ist mittels eines mit "1." gekennzeichneten Pfeils angedeutet, dass die Einstelleinrichtung 6 in Form des Druck-/Drehknopfes in einem ersten Schritt vom Benutzer gedrückt wird. Dieses Drücken der Einstelleinrichtung 6 bewirkt, dass die Richtung, in der der einzustellende Parameter, also die Zeitdauer, beim Drehen der Einstelleinrichtung 6 in die eine bzw. in die andere Richtung geändert wird, umgekehrt wird. Um also die Zeit von 32 auf 30 Sekunden zu korrigieren, dreht der Benutzer die Einstelleinrichtung 6 in einem zweiten Schritt, in der Fig. 4 gekennzeichnet mit "2.", wieder nach rechts, da er hiermit die Feineinstellung vornehmen kann, allerdings nur um einen geringeren Betrag, da er ja nur 2 Sekunden einstellen will. Aufgrund des vorherigen Drückens der Einstelleinrichtung 6 werden diese 2 Sekunden nicht hinzuaddiert, sondern abgezogen, da sich ja die Richtung, in der der einzustellende Parameter, vorliegend also die Zeitdauer, geändert wird, umgekehrt hat.

Der Einstelleinrichtung 6 kommt gemäß dem vorliegend beschriebenen bevorzugten Ausführungsbeispiel der Erfindung noch eine weitere Funktionalität zu. Neben dem Einstellen einer Zeitdauer kann mit der als Druck-/Drehknopf ausgestalteten Einstelleinrichtung 6 auch eine automatische Rezeptauswahl auf der Grundlage einer Quasi-Zufallsfunktion erfolgen. Die Einstelleinrichtung 6 erfasst nämlich nicht nur den Drehwinkel und die Drehrichtung, sondern auch die Beschleunigung der Drehung der Einstelleinrichtung 6, wenn diese vom Benutzer gedreht wird. Auf der Grundlage der erfassten Beschleunigung der Einstelleinrichtung 6 kann in einem vorher vom Benutzer auf dem Touch-Display ausgewählten Betriebsmodus eine, zumindest subjektiv für den Benutzer, zufällige Auswahl eines Rezeptes erzielt werden.

Das elektrische Küchengerät gemäß dem vorliegend beschriebenen bevorzugten Ausführungsbeispiel der Erfindung stellt nämlich eine derartige Funktion zur "zufälligen" Auswahl eines Rezeptes zur Verfügung, die auf der Grundlage von von dem Benutzer verfügbaren Zutaten, die der Benutzer durch Scrollen in einer ihm auf dem Touch-Display 5 angezeigten Liste ausgewählt hat, zur einer quasi-zufälligen Auswahl eines mit diesen Zutaten herstellbaren Rezeptes führt. Den beim Drehen der Einstelleinrichtung 6 möglichen Beschleunigungen ist nämlich im elektrischen Küchengerät 1 jeweils genau ein Rezept zugeordnet, so dass es über die tatsächlich erfasste Beschleunigung der Einstelleinrichtung 6 zu einer quasi-zufälligen Rezeptauswahl kommt, die jedenfalls vom Benutzer praktisch nicht beeinflussbar ist, da die Beschleunigung der Einstelleinrichtung 6 vom Benutzer nicht genau genug steuerbar bzw. vorhersehbar ist.

**Bezugszeichenliste**

| | |
|---|---|
| Elektrisches Küchengerät | 1 |
| Verarbeitungsraum | 2 |
| Rühr- und Schneidwerk | 3 |
| Zentrale Steuereinheit | 4 |
| Touch-Display | 5 |
| Einstelleinrichtung | 6 |
| Teil des Touch-Displays zur Anzeige einer Zeitdauer | 7 |
| Teil des Touch-Displays zur Anzeige eines ausgewählten Rezeptes | 8 |

## Patentansprüche

1. Elektrisches Küchengerät zur Verarbeitung von Nahrungsmitteln mittels wenigstens einer von einem Benutzer einstellbaren Verarbeitungsfunktion,
mit einer Einstelleinrichtung (6) zum benutzerseitigen Einstellen wenigstens eines Parameters der Verarbeitungsfunktion, wobei
die Einstelleinrichtung (6) als Drehknopf ausgebildet ist, **dadurch gekennzeichnet,**
**dass** ein derartiger Betriebsmodus vorgesehen ist, in dem mittels eines Drehens des Drehknopfes in eine Richtung der Parameter um einen ersten Betrag pro Drehwinkel verändert wird und mittels eines Drehens des Drehknopfes in die entgegengesetzte Richtung der Parameter um einen zweiten Betrag pro Drehwinkel verändert wird, wobei der erste Betrag vom zweiten Betrag verschieden ist.

2. Elektrisches Küchengerät nach Anspruch 1, **dadurch gekennzeichnet, dass** die Richtung, in der der Parameter durch Drehen des Drehknopfes in die eine Richtung bzw. in die andere Richtung verändert wird, dieselbe ist.

3. Elektrisches Küchengerät nach Anspruch 2, **dadurch gekennzeichnet, dass** eine erste Umschalteinrichtung vorgesehen ist, die eine erste Umschaltfunktion bereitstellt, mittels der die Richtung, in der der Parameter durch Drehen des Drehknopfes in die eine Richtung bzw. in die andere Richtung verändert wird, umschaltbar ist.

4. Elektrisches Küchengerät nach Anspruch 3, **dadurch gekennzeichnet, dass** die Einstelleinrichtung (6) als Druck-/Drehknopf ausgebildet ist und die erste Umschaltfunktion durch ein Drücken des Druck-/Drehknopfes aktivierbar ist.

5. Elektrisches Küchengerät nach einem der Ansprüche 1 bis 4, **dadurch gekennzeichnet, dass** eine zweite Umschalteinrichtung vorgesehen ist, die eine zweite Umschaltfunktion bereitstellt, mittels der ein anderer Betriebsmodus aktivierbar ist, in dem mittels eines Drehens des Drehknopfes in die eine Richtung bzw. in die entgegengesetzte Richtung der Parameter jeweils um denselben Betrag pro Drehwinkel verändert wird.

6. Elektrisches Küchengerät nach einem der vorhergehenden Ansprüche, **dadurch gekennzeichnet, dass** ein derartiger Betriebsmodus vorgesehen ist, in dem beim Drehen des Drehknopfes die Beschleunigung der Drehung des Drehknopfes erfasst wird und auf der Grundlage der erfassten Beschleunigung der Parameter der Verarbeitungsfunktion automatisch eingestellt wird.

7. Elektrisches Küchengerät nach einem der vorhergehenden Ansprüche, **dadurch gekennzeichnet, dass** die automatische Einstellung der Verarbeitungsfunktion eine automatische Rezeptauswahl umfasst.

8. Elektrisches Küchengerät nach Anspruch 7, **dadurch gekennzeichnet, dass** die automatische Rezeptauswahl auf einer Quasi-Zufallsfunktion beruht.

9. Verfahren zum Betrieb eines elektrischen Küchengeräts (1) zur Verarbeitung von Nahrungsmitteln mittels wenigstens einer von einem Benutzer einstellbaren Verarbeitungsfunktion, wobei das elektrische Küchengerät (1) eine Einstelleinrichtung (6) zum benutzerseitigen Einstellen wenigstens eines Parameters der Verarbeitungsfunktion aufweist und die Einstelleinrichtung (6) als Drehknopf ausgebildet ist, **dadurch gekennzeichnet, dass** in einem Betriebsmodus durch Drehen des Drehknopfes in eine Richtung der Parameter um einen ersten Betrag pro Drehwinkel verändert wird und mittels eines Drehens des Drehknopfes in die entgegengesetzte Richtung der Parameter um einen zweiten Betrag pro Drehwinkel verändert wird, wobei der erste Betrag vom zweiten Betrag verschieden ist.

10. Verfahren nach Anspruch 9, **dadurch gekennzeichnet, dass** in einem Betriebsmodus beim Drehen des Drehknopfes die Beschleunigung der Drehung des Drehknopfes erfasst und auf der Grundlage der erfassten Beschleunigung der Parameter der Verarbeitungsfunktion automatisch eingestellt wird.

## Claims

1. Electrical kitchen appliance for processing food by means of at least one processing function which can be set by a user, comprising a setting device (6) in order to allow the user to set at least one parameter of the processing function, the setting device (6) being formed as a dial, **characterised in that** an operating mode is provided in which the parameter is changed by a first value for each angle of rotation by turning the dial in one direction and in which the parameter is changed by a second value for each angle of rotation by turning the dial in the opposite direction, the first value being different from the second value.

2. Electrical kitchen appliance according to claim 1, **characterised in that** the direction in which the parameter is changed by turning the dial in one direction or in the other direction is the same.

3. Electrical kitchen appliance according to claim 2, **characterised in that** a first switching device is provided which provides a first switching function, by means of which the direction in which the parameter is changed by turning the dial in one direction or in the other direction can be switched.

4. Electrical kitchen appliance according to claim 3, **characterised in that** the setting device (6) is formed as a push button/dial and the first switching function can be activated by pressing the push button/dial.

5. Electrical kitchen appliance according to any of claims 1 to 4, **characterised in that** a second switching device is provided which provides a second switching function, by means of which a different operating mode can be activated in which the parameter is changed in each case by the same value for each angle of rotation by turning the dial in one direction or in the opposite direction.

6. Electrical kitchen appliance according to any of the preceding claims, **characterised in that** an operating mode is provided in which, when turning the dial, the acceleration when the dial is turned is detected and the parameter of the processing function is automatically set on the basis of the detected acceleration.

7. Electrical kitchen appliance according to any of the preceding claims, **characterised in that** the automatic setting of the processing function comprises an automatic recipe selection.

8. Electrical kitchen appliance according to claim 7, **characterised in that** the automatic recipe selection is based on a quasi-random function.

9. Method for operating an electrical kitchen appliance (1) for processing food by means of at least one processing function which can be set by a user, the electrical kitchen appliance (1) comprising a setting device (6) in order to allow the user to set at least one parameter of the processing function and the setting device (6) being formed as a dial, **characterised in that**, in one operating mode, the parameter is changed by a first value for each angle of rotation by turning the dial in one direction and by a second value for each angle of rotation by turning the dial in the opposite direction, the first value being different from the second value.

10. Method according to claim 9, **characterised in that**, in one operating mode, when turning the dial, the acceleration when the dial is turned is detected and the parameter of the processing function is automatically set on the basis of the detected acceleration.

## Revendications

1. Robot de cuisine électrique (1) pour le traitement d'aliments au moyen d'au moins une fonction de traitement réglable par l'utilisateur,
comprenant un dispositif de réglage (6) pour le réglage par l'utilisateur d'au moins un paramètre de la fonction de traitement, dans lequel
le dispositif de réglage (6) est réalisé en tant que bouton rotatif, **caractérisé en ce qu'**
est prévu un mode de fonctionnement dans lequel le paramètre est modifié d'une première valeur par angle de rotation en faisant tourner le bouton rotatif dans un sens et le paramètre est modifié d'une deuxième valeur par angle de rotation en faisant tourner le bouton rotatif dans le sens opposé, dans lequel la première valeur est différente de la deuxième valeur.

2. Robot de cuisine électrique selon la revendication 1, **caractérisé en ce que** le sens dans lequel le paramètre est modifié en faisant tourner le bouton rotatif dans un sens ou dans l'autre, est le même.

3. Robot de cuisine électrique selon la revendication 2, **caractérisé en ce qu'**est prévu un premier dispositif de commutation qui procure une première fonction de commutation au moyen de laquelle le sens dans lequel le paramètre est modifié en faisant tourner le bouton rotatif dans un sens ou dans l'autre, est susceptible d'être inversé.

4. Robot de cuisine électrique selon la revendication 3, **caractérisé en ce que** le dispositif de réglage (6) est réalisé en tant que bouton poussoir rotatif et que la première fonction de commutation est activable par pression sur le bouton poussoir rotatif.

5. Robot de cuisine électrique selon l'une des revendications 1 à 4, **caractérisé en ce qu'**un deuxième dispositif de commutation est prévu qui procure une deuxième fonction de commutation au moyen de laquelle un autre mode de fonctionnement peut être activé dans lequel le paramètre est modifié à chaque fois d'une même valeur par angle de rotation en faisant tourner le bouton rotatif dans un sens ou dans l'autre.

6. Robot de cuisine électrique selon l'une des revendications précédentes, **caractérisé en ce qu'**est prévu un mode de fonctionnement dans lequel est déterminé l'accélération de la rotation du bouton rotatif lorsqu'on fait tourner le bouton rotatif et que le paramètre de la fonction de traitement est automatiquement réglé sur la base de l'accélération déterminée.

7. Robot de cuisine électrique selon l'une des revendications précédentes, **caractérisé en ce que** le réglage automatique de la fonction de traitement comprend une sélection automatique de recette.

8. Robot de cuisine selon la revendication 7, **caractérisé en ce que** la sélection automatique de recette repose sur une fonction quasi-aléatoire.

9. Procédé de fonctionnement d'un robot de cuisine électrique (1) pour le traitement d'aliments au moyen d'au moins une fonction de traitement réglable par l'utilisateur, dans lequel le robot de cuisine électrique (1) comprend un dispositif de réglage (6) pour le réglage par l'utilisateur d'au moins un paramètre de la fonction de traitement et le dispositif de réglage (6) est réalisé en tant que bouton rotatif, **caractérisé en ce que** dans un mode de fonctionnement le paramètre est modifié d'une première valeur par angle de rotation en faisant tourner le bouton rotatif dans un sens et le paramètre est modifié d'une deuxième valeur par angle de rotation en faisant tourner le bouton rotatif dans le sens opposé, dans lequel la première valeur est différente de la deuxième valeur.

10. Procédé selon la revendication 9, **caractérisé en ce que** dans un mode de fonctionnement est déterminé l'accélération de la rotation du bouton rotatif lorsqu'on fait tourner le bouton rotatif et que le paramètre de la fonction de traitement est automatiquement réglé sur la base de l'accélération déterminée.
